(19) Europäisches Patentamt
European Patent Office
Office européen des brevets

(11) Veröffentlichungsnummer: **0 241 427**
**A2**

(12) **EUROPÄISCHE PATENTANMELDUNG**

(21) Anmeldenummer: **87810212.8**

(22) Anmeldetag: **06.04.87**

(51) Int. Cl.³: **C 07 C 83/02**
C 08 K 5/32, C 10 M 133/30

(30) Priorität: **11.04.86 US 850810**

(43) Veröffentlichungstag der Anmeldung:
**14.10.87 Patentblatt 87/42**

(84) Benannte Vertragsstaaten:
**BE CH DE ES FR GB IT LI NL SE**

(71) Anmelder: **CIBA-GEIGY AG**
**Klybeckstrasse 141**
**CH-4002 Basel(CH)**

(72) Erfinder: **Ravichandran, Ramanathan**
**111 DeHaven Drive, Apt. 125**
**Yonkers New York 10703(US)**

(54) **Mit di- oder trisubstituierten Hydroxylaminen stabilisierte Zusammensetzungen und neue di- oder trisubstituierte Hydroxylaminen.**

(57) Es werden Zusammensetzungen beschrieben, die gegen oxidativen, thermischen und/oder aktinischen Abbau empfindliche Kunststoffe, Polymere, Harze oder Schmieröle und als Stabilisator mindestens eine Verbindung der Formel I

$$\left[\begin{matrix} R^1 \\ \quad N{-}O \\ R^2 \end{matrix}\right]_n \!\!-X \qquad (I)$$

enthalten, worin
$R^1$ Wasserstoff, $C_1$–$C_{36}$–Alkyl, $C_5$–$C_{12}$–Cycloalkyl, $C_2$–$C_9$–Aralkyl oder mit $C_1$–$C_{36}$–Alkyl substituiertes $C_7$–$C_9$–Aralkyl bedeutet, $R^2$ $C_1$–$C_{36}$–Alkyl, $C_5$–$C_{12}$–Cycloalkyl, $C_7$–$C_9$–Aralkyl oder mit $C_1$–$C_{36}$–Alkyl substituiertes $C_7$–$C_9$–Aralkyl darstellt,
n 1 bis 4 ist,
X, bei n = 1, eine der für $R^2$ angegebenen Bedeutungen hat,
bei n = 2, $C_2$–$C_{12}$–Alkylen, $C_6$–$C_{10}$–Cycloalkylen oder $C_8$–$C_{10}$–Alkylenarylenalkylen,
bei n = 3, $C_3$–$C_6$–Alkantriyl oder eine Gruppe der Formel

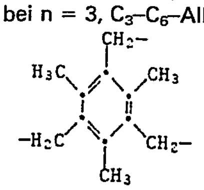

und

bei n = 4, $C_4$–$C_6$–Alkantetrayl darstellt.

Die Verbindungenn der Formel I mit n = 2, 3 oder 4 sind neu, unter der Bedingung, dass mindestens eines von $R^1$ und $R^2$ $C_7$–$C_9$–Aralkyl oder mit $C_1$–$C_{36}$–Alkyl substituiertes $C_7$–$C_9$–Aralkyl darstellt, wenn n = 2 ist und X $C_2$–$C_{12}$–Alkylen bedeutet.

EP 0 241 427 A2

CIBA-GEIGY AG
Basel (Schweiz)

3-15828/-/CGC 1192

# Mit di- oder trisubstituierten Hydroxylaminen stabilisierte Zusammensetzungen und neue di- oder trisubstituierte Hydroxylamine

Die vorliegende Erfindung betrifft neue mit di- oder trisubstituierten Hydroxylaminen stabilisierte Zusammensetzungen, die mit den di- oder trisubstituierten Hydroxylaminen stabilisierten organischen Materialien sowie neue di- oder trisubstituierte Hydroxylamine.

Polymere organische Materialien, wie Kunststoffe und Harze, sind gegen thermischen, oxidativen und/oder lichtinduzierten Abbau empfindlich. Aus der Literatur sind zahlreiche Verbindungen zum Stabilisieren verschiedener Substrate bekannt. Die Wirksamkeit der Stabilisatoren hängt von den den Abbau bewirkenden Einflüssen und der Art des stabilisierten Substrats ab. Im allgemeinen ist eine Voraussage, welcher Stabilisator auf einem spezifischen Anwendungsgebiet am wirksamsten und wirtschaftlichsten ist, schwierig. So kann z.B. die Stabilisatorwirkung bezüglich Reduktion der Flüchtigkeit davon abhängen, dass in den Substratmolekülen ein Zerfall der Bindungen verhindert wird. Um unter Beibehaltung der Elastizität die Brüchigkeit eines Polymeren oder Kautschuks zu verringern, kann es darauf ankommen, dass eine zu starke Vernetzung und/oder ein Kettenzerfall verhindert werden. Zum Verhindern der Verfärbung können Inhibitorreaktionen, welche im Substrat oder im Stabilisator neue Chromophore oder Farbkörper bilden, erforderlich sein. Zudem müssen auch die Probleme der Verarbeitungsstabilität und der Substratverträglichkeit berücksichtigt werden.

Verschiedene organische Hydroxylamine sind allgemein bekannt und zum Teil im Handel erhältlich. In verschiedenen Patentschriften sind N-substituierte Hydroxylamine als Antioxidantien für verschiedene Substrate, wie Polyolefine, Polyester und Polyurethane, bekannt. Als repräsentative Beispiele seien die US-PS 3.432.578, 3.644.278, 3.778.464, 3.408.422, 3.926.909, 4.316.996 und 4.386.224 genannt, in denen im wesentlichen N,N-Dialkyl-, N,N-Diaryl- und N,N-Diaralkylhydroxylamine und deren Wirksamkeit zum Verbessern der Farbe und Farbbeständigkeit beschrieben sind.

Aus der Literatur sind zudem verschiedene N,N,O-trisubstituierte und N,O-disubstituierte Hydroxylamine bekannt, beispielsweise:
US-PS 3.184.500: Verbindungen $(R)_2NOCH_2CH_2O$-Acyl, worin R eine niedere Alkylgruppe, wie Methyl, darstellt;
US-PS 3.344.190: Verbindungen $(R)_2NOCH_2CH_2OH$ mit R = Niederalkyl;
US-PS 3.869.278: Verbindungen $(R)_2NOR_1$ mit R = Alkyl und $R_1$ = unter anderem Alkyl oder Phenyl, als Fruchtabszissionsmittel;
DE-PS 1.237.129: Herstellung von N,N,O-trisubstituierten Hydroxylaminen durch UV-Bestrahlung von Aminoxiden;
Leo A. Paquette [J. Org. Chem. 29, 3545 (1964)]: Herstellung von Verbindungen $(R)_2NCH_2CH_2ONH_2$ mit $(R)_2N$ = Heptamethylenimino, Morpholino, Pyrrolidino, Phenothiazin-10-yl oder 5-Dibenzazepinyl;
E.I. Schuman et al. [J. Med. Chem. 7, 329 (1964)]: Herstellung verschiedener O-Aralkylhydroxylamine zur Verwendung als 5-Hydroxytryptophan-Decarboxylase-Inhibitoren und milde Depressiva;
A.T. Fuller [J.C.S., Teil 2, 963 (1974)]: Herstellung einer Reihe von O-Alkyl- und O,O'-Alkylenhydroxylaminen (aus Hydroxyurethanen) mit potentieller antibakterieller Wirkung;
Bernhart [Tet. Lett. 29, 2493 (1974)]: Herstellung einer Reihe von N,O-Dialkylhydroxylaminen durch Reduktion von O-Alkylbenzaldoximen;
B.V. Tronov et al. [Chem. Abstr. 66, 37339f (1967)]: Herstellung und Eigenschaften von N-Alkoxydiethylaminen;
E. Flesia et al. [Tet. Lett. 197-200 (1979)]: O-Alkylierung von Diethylhydroxylamin;
I.M. Bortori et al. [Chem. Abstr. 73, 55743g (1969)]: Synthese und antibakterielle Eigenschaften von N-(Aryloxy)diethylaminen;

F. Klages [Ber. 96, 2387-2393 (1963)]: Herstellung von $(PhCH_2)_2NOEt$ und $(tert.Butyl)_2NOCH_2Ph$;
JP-OS 69-25772 [Chem. Abstr. 72, 78685h (1970)]: Herstellung von $(R')(OR)NCH_2CH_2CO(C_6H_4X)$ als entzündungshemmende Mittel.
Alle diese Verbindungen finden Anwendung als Pharma- oder Agrowirkstoffe.

Gegenstand der Erfindung sind Zusammensetzungen, enthaltend gegen oxidativen, thermischen und/oder aktinischen Abbau empfindliche Kunststoffe, Polymere, Harze oder Schmieröle und mindestens eine Verbindung der Formel I

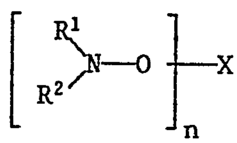

(I),

worin
$R^1$ Wasserstoff, $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl bedeutet,
$R^2$ $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl darstellt,
n 1 bis 4 ist,
X, bei n = 1, eine der für $R^2$ angegebenen Bedeutungen hat;
bei n = 2, $C_2$-$C_{12}$-Alkylen, $C_6$-$C_{10}$-Cycloalkylen oder $C_8$-$C_{10}$-Alkylenarylenalkylen,
bei n = 3, $C_3$-$C_6$-Alkantriyl oder eine Gruppe der Formel

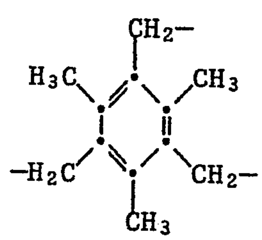

und

bei n = 4, $C_4$-$C_6$-Alkantetrayl darstellt.

Die erfindungsgemässen Zusammensetzungen weisen verschiedene wertvolle Eigenschaften auf. Mit den Verbindungen der Formel I können verschiedene Substrate, wie Polyolefine, Elastomere und Schmieröle, gegen die schädigenden Auswirkungen des oxidativen, thermischen und/oder lichtinduzierten Abbaus, geschützt werden. Sie eignen sich insbesondere als Farbverbesserer und Verarbeitungsstabilisatoren in Polyolefin-Zusammensetzungen, die gegebenenfalls Metallsalze von Fettsäuren und auch phenolische Antioxidantien enthalten. Sie dienen also dazu, die durch die Anwesenheit von phenolischen Antioxidantien und/oder durch die Verarbeitungsbedingungen verursachte Farbbildung merklich zu verringern und auch die Polymeren direkt gegen schädigende Auswirkungen der Verarbeitungsbedingungen zu schützen. Sie verhindern ferner die Verfärbung von Polyolefin-Zusammensetzungen, die sterisch gehinderte Amin-Lichtstabilisatoren oder Kombinationen von phenolischen Antioxidantien und organischen Phosphiten enthalten. Schliesslich wird auch die Verfärbung unter dem Einfluss von Verbrennungsgasen oder natürlichen Gasen merklich reduziert.

$R^1$, $R^2$ und X als $C_1$-$C_{36}$-Alkyl können geradkettig oder verzweigt sein und sind beispielsweise Methyl, Ethyl, n-Butyl, 2-Ethylhexyl, n-Octyl, n-Decyl, n-Dodecyl, n-Octadecyl, Icosyl, Tetracosyl, Tricontyl oder Hexatricontyl. Als Alkylgruppen $R^1$, $R^2$ und X werden solche dmit 1-18 C-Atomen bevorzugt.

$R^1$, $R^2$ und X als $C_5$-$C_{12}$-Cycloalkyl sind beispielsweise Cyclopentyl, Cyclohexyl, Cyclooctyl oder Cyclododecyl. Bevorzugt ist Cycloalkyl mit 5 bis 7 "$-CH_2-$"-Ringgliedern. Besonders bevorzugt ist Cyclohexyl.

$R^1$, $R^2$ und X können als unsubstituiertes oder durch $C_1$-$C_{36}$-Alkyl substituiertes $C_7$-$C_9$-Aralkyl insbesondere Phenylalkyl mit 7 bis 9 Kohlenstoffatomen bedeuten, wobei der Phenylring gegebenenfalls durch $C_1$-$C_{36}$-Alkyl, bevorzugt Methyl, substituiert sein kann. Als Beispiele seien genannt: Benzyl, α-Methylbenzyl, α,α-Dimethylbenzyl,

3- oder 4-Methylbenzyl, 3,5-Dimethylbenzyl oder 4-Nonylbenzyl. Bevorzugt sind Methylbenzyl, besonders 3-Methylbenzyl, und vor allem Benzyl.

Alkylengruppen X können geradkettig oder verzweigt sein und stellen zum Beispiel Ethylen, 1,2-Propylen, Trimethylen, Tetramethylen, Hexamethylen, Octamethylen oder Dodecamethylen dar. Besonders bevorzugt ist Octamethylen.

Als $C_6$-$C_{10}$-Cycloalkylen stellt X beispielsweise Cyclohexylen, Cyclooctylen oder Cyclodecylen dar. Bevorzugt ist Cyclohexylen.

Stellt X $C_3$-$C_{10}$-Alkylenarylenalkylen dar, so handelt es sich z.B. um m-Xylylen, besonders aber um p-Xylylen.

Stellt X $C_3$-$C_6$-Alkantriyl oder $C_4$-$C_6$-Alkantetrayl dar, so handelt es sich beispielsweise um Propan-1,2,3-triyl, Hexan-1,2,6-triyl, 2,2-Dimethylpropan-1,2,2,3-tetrayl oder Hexan-1,3,4,5-tetrayl.

Bevorzugt sind Verbindungen der Formel I, worin $R^1$ und $R^2$ unabhängig voneinander $C_1$-$C_{18}$-Alkyl, $C_5$-$C_6$-Cycloalkyl, Benzyl oder Methylbenzyl darstellen oder worin $R^1$ Wasserstoff ist und $R^2$ $C_1$-$C_{18}$-Alkyl, $C_5$-$C_6$-Cycloalkyl, Benzyl oder Methylbenzyl bedeutet. Besonders bevorzugt sind Verbindungen der Formel I, worin $R^1$ und $R^2$ n-Dodecyl, Methylbenzyl und insbesondere Benzyl darstellen, oder worin $R^1$ Wasserstoff ist und $R^2$ n-Dodecyl, Methylbenzyl und vor allem Benzyl bedeutet.

n stellt vorzugsweise 1 oder 2 dar.

Gemäss einer weiteren Bevorzugung stellt X bei n = 1 $C_1$-$C_{18}$-Alkyl, $C_5$-$C_6$-Cycloalkyl, Benzyl oder Methylbenzyl, insbesondere Methyl, m-Methylbenzyl und vor allem Benzyl dar.

Des weiteren sind Verbindungen der Formel I bevorzugt, worin n die Zahl 2 ist und X $C_2$-$C_{12}$-Alkylen, Cyclohexylen oder Xylylen, besonders $-(CH_2)_8-$ bedeutet.

Bei n = 3 stellt X bevorzugt 2,4,6-Trimethylmesityl und bei n = 4 Pentaerythrityl dar.

Gegenstand der Erfindung sind auch die neuen di- oder trisubstituierten Hydroxylamine der Formel Ia

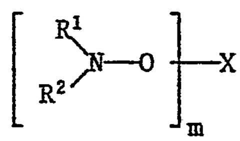

(Ia),

worin
$R^1$ Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl darstellt,
$R^2$ $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeutet,
m 2 bis 4 ist,
X, bei m = 2, $C_2$-$C_{12}$-Alkylen, $C_6$-$C_{10}$-Cycloalkylen oder $C_8$-$C_{10}$-Alkylenarylenalkylen,
bei m = 3, $C_3$-$C_6$-Alkantriyl oder eine Gruppe

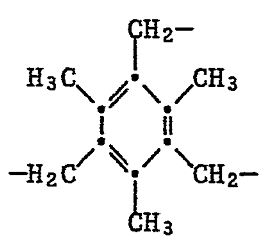

und

bei m = 4, $C_4$-$C_6$-Alkantetrayl darstellt, mit der Massgabe, dass bei m = 2 und X = $C_2$-$C_{12}$-Alkylen mindestens eines von $R^1$ und $R^2$ $C_7$-$C_9$-Aralkyl oder durch $C_1$-$C_{36}$-Alkyl substituiertes $C_7$-$C_9$-Aralkyl ist.

Dabei gilt in Bezug auf bevorzugte Bedeutungen von $R^1$, $R^2$, X und m das oben unter Formel I Angegebene (m entspricht n).

Die Verbindungen der Formeln I und Ia können nach an sich bekannten Verfahren z.B. dadurch hergestellt werden, dass man ein Hydroxylamin der Formel II

$$[H_2N-O]_n X' \qquad (II),$$

worin

X' Wasserstoff darstellt oder eine der Bedeutungen von X hat, zweckmässig in Form des Hydrochlorids und in Gegenwart eines Lösungsmittels, mit einem Halogenid $R^2$-Hal oder einem Gemisch verschiedener Halogenide $R^2$-Hal umsetzt. Dabei haben n und $R^2$ die unter Formel I angegebene Bedeutung und Hal stellt ein Halogenatom, wie Chlor und insbesondere Brom dar. Geeignete Lösungsmittel sind z.B. aromatische Kohlenwasserstoffe, wie Benzol, Toluol und Xylole, sowie heterocyclische Ether, wie Tetrahydrofuran oder Dioxan. Bevorzugt als Lösungsmittel sind Carbonsäuredialkylamide, wie Dimethylformamid und Dimethylacetamid. Besonders bevorzugt ist Dimethylformamid.

Die Umsetzung wird zweckmässig bei Temperaturen zwischen 25°C und 150°C und bevorzugt in Gegenwart eines säurebindenden Mittels, wie Natriumcarbonat, durchgeführt. Die Verbindungen der Formel II und die Halogenide $R^2$-Hal sind im Handel erhältlich oder können auf an sich bekannte Weise hergestellt werden.

Die Verbindung des Beispiels 8 [α,α'-Bis(benzyloxyamino)-p-xylol] ist ebenfalls neu und kann wie unten beschrieben hergestellt werden.

N,O-dialkylierte Verbindungen der Formel I werden vorzugsweise durch Umsetzung (Hydrierung) der entsprechenden O-substituierten ($R^1$)($R^2$)-Aldoxime in Gegenwart eines alkoholischen Lösungsmittels, wie Methanol, und in Gegenwart eines Hydrid-Reduktionsmittels, wie

Natriumcyanborhydrid, bei saurem pH hergestellt. Dabei liegen die Reaktionstemperaturen im allgemeinen zwischen 25°C und 85°C. Die bei diesem Verfahren einzusetzenden Ausgangsprodukte sind ebenfalls im Handel erhältlich oder können auf an sich bekannte Weise hergestellt werden.

Bifunktionelle N,N,O-trialkylierte Hydroxylamine der Formel I (n = 2) können ferner nach einem an sich bekannten Mehrstufenverfahren hergestellt werden. Dabei geht man zweckmässig wie folgt vor: Zuerst wird N-Hydroxyurethan in einem alkoholischen Lösungsmittel und in Gegenwart eines säurebindenden Mittels, wie eines Alkalimetallhydroxids, mit einer Dibromverbindung Br-X-Br umgesetzt. Die Umsetzung erfolgt zweckmässig bei Temperaturen zwischen 25°C und 100°C und bevorzugt bei Rückflusstemperatur. Das erhaltene Dioxyurethan wird anschliessend in der wässrigen Lösung einer Base, z.B. eines Alkalimetallhydroxids, unter Rückfluss zum entsprechenden Dioxydiamin umgesetzt. Schliesslich wird das Dioxydiamin in einem geeigneten Lösungsmittel, wie z.B. Dimethylformamid, gelöst, mit einem säurebindenden Mittel, z.B. wasserfreiem Natriumcarbonat, vemischt und dann langsam mit einem Halogenid $R^2$-Hal oder einem Gemisch verschiedener Halogenide $R^2$-Hal, insbesondere einem Bromid, versetzt. Diese Umsetzung wird üblicherweise bei Temperaturen zwischen 25°C und 80°C und vorzugsweise bei Raumtemperatur durchgeführt. Die bei diesem Verfahren verwendeten Reagentien sind im Handel erhältlich oder können nach an sich bekannten Methoden hergestellt werden.

Nach den beschriebenen Verfahren werden in jedem Fall di- oder trisubstituierte Hydroxylamine, d.h. N,O-disubstituierte oder N,N,O-trisubstituierte Hydroxylamine, erhalten.

Die Verbindungen der Formel I eignen sich insbesondere zum Stabilisieren der folgenden Substrate: Polyolefin-Homo- und -Copolymere, wie Polyethylen und Polypropylen; Polystyrol einschliesslich schlagfestem Polystyrol, ABS-Harze, Styrol-Butadien-Kautschuk,

Isopren und natürliche Kautschuke, Polyester, wie Polyethylenterephthalat- und Polybutylenterephthalat-Homo- und -Copolymere, ferner Schmieröle, z.B. solche auf der Basis von Mineralölen.

Als Polymere eignen sich beispielsweise:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-(α-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,ß-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, z.B. Mineralöle und Abmischungen synthetischer Ester (wie Phthalate, Adipate, Phosphate oder Trimellitate) mit Mineralölen in beliebigen Mengenverhältnissen, wie sie beispielsweise als Spinnlösungen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Bevorzugt sind Zusammensetzungen, worin das zu stabilisierende Material ein synthetisches Polymer ist, insbesondere ein Polyolefinhomo- oder -copolymer.

Im allgemeinen können die Stabilisatoren der Formel I in Konzentrationen von etwa 0,01 bis etwa 5 Gew.%, bezogen auf das zu stabilisierende Material, eingesetzt werden; die Stabilisatormenge kann allerdings je nach Verwendung und Substrat variieren. Bevorzugt verwendet man etwa 0,5 bis etwa 2 Gew.%, besonders etwa 0,1 bis etwa 1 Gew.%.

Die Einarbeitung der Verbindungen der Formel I in das zu stabilisierende Material kann nach bekannten Methoden während jeder Verarbeitungsstufe vor der Formgebung erfolgen. Der Stabilisator kann den zu stabilisierenden Materialien in Pulverform zugemischt werden, oder eine Suspension oder Emulsion des Stabilisators kann mit einer Lösung, Suspension oder Emulsion des zu stabilisierenden Materials vermischt werden. Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die erfindungsgemässen stabilisierten Zusammensetzungen können gegebenenfalls auch übliche Additive enthalten.

Beispiele für herkömmliche Additive sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butyl-

phenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methyl-benzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.-butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.-butyl-4-hydroxyanilino)-s-triazin, N-(3,5-di-tert.butyl-4-hydroxyphenyl)-carbaminsäureoctylester.

1.7. Ester der ß-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der ß-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)-ethyl-isocyanurat, N,N'-Bis-(hydroxyethyl)-oxalsäurediamid.

1.9. Ester der ß-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der ß-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.

2.4. Acrylate, wie z.B. α-Cyan-ß,ß-diphenylacrylsäure-ethylester bzw. -isooctylester, α-Carbomethoxy-zimtsäuremethylester, α-Cyano-ß-methyl-p-methoxy-zimtsäuremethylester bzw. -butylester, α-Carbomethoxy-p-methoxy-zimtsäure-methylester, N-(ß-Carbomethoxy-ß-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der ß-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Bevorzugt enthalten die erfindungsgemässen Zusammensetzungen als weitere Zusätze ein Metallsalz einer höheren Fettsäure und/oder ein phenolisches Antioxidans.

Obschon sich die Hydroxylamine der Formel I allein oder in Mischung mit anderen Additiven zum Stabilisieren verschiedenartiger Substrate, besonders Polyolefine, eignen, bewirkt der Zusatz dieser Stabilisatoren zusammen mit sterisch gehinderten phenolischen

Antioxidantien zu verschiedenen Zusammensetzungen, besonders Polyolefinen, die gegebenenfalls Alkalimetall-, Erdalkalimetall- und/oder Aluminiumsalze von höheren Fettsäuren enthalten (vgl. Punkt 7 oben) einen besonders guten Schutz der Substrate hinsichtlich der in Gegenwart der genannten Phenole auftretenden Farbbildung. Geeignete phenolische Antioxidantien sind:

n-Octadecyl-(3,5-di-tert-butyl-4-hydroxyhydrocinnamat),
Neopentantetrayl-tetrakis[3,5-di-tert-butyl-4-hydroxyhydrocinnamat],
Di-n-octadecyl-(3,5-di-tert-butyl-4-hydroxybenzyl)phosphonat,
1,3,5-Tris[3,5-di-tert-butyl-4-hydroxybenzyl]isocyanurat,
Thiodiethylen-bis[3,5-di-tert-butyl-4-hydroxyhydrocinnamat],
1,3,5-Trimethyl-2,4,6-tris[3,5-di-tert-butyl-4-hydroxybenzyl]benzol,
3,6-Dioxaoctamethylen-bis[3-methyl-5-tert-butyl-4-hydroxyhydrocinnamat],
2,6-Di-tert-butyl-p-kresol,
2,2'-Ethyliden-bis[4,6-di-tert-butyl-phenol],
1,3,5-Tris[2,6-dimethyl-4-tert-butyl-3-hydroxybenzyl]isocyanurat,
1,1,3-Tris[2-methyl-4-hydroxy-5-tert-butylphenyl]butan,
1,3,5-Tris[2-(3,5-di-tert-butyl-4-hydroxyhydrocinnamoyloxy)-ethyl]isocyanurat,
3,5-Bis[3,5-di-tert-butyl-4-hydroxybenzyl]mesitol,
Hexamethylen-bis[3,5-di-tert-butyl-4-hydroxyhydrocinnamat],
1-(3,5-Di-tert-butyl-4-hydroxyanilino)-3,5-bis(octylthio)-s-triazin,
N,N'-Hexamethylen-bis[3,5-di-tert-butyl-4-hydroxyhydrocinnamamid],
Kalzium-Bis[ethyl-(3,5-di-tert-butyl-4-hydroxybenzyl)phosphonat],
Ethylen-bis[3,3-bis(3-tert-butyl-4-hydroxyphenyl)butyrat],
Octyl-(3,5-di-tert-butyl-4-hydroxybenzylmercaptoacetat),
Bis[3,5-di-tert-butyl-4-hydroxyhydrocinnamoyl]hydrazid und
N,N'-bis[2-(3,5-di-tert-butyl-4-hydroxyhydrocinnamoyloxy)-ethyl]oxamid.

Besonders bevorzugt sind
Neopentantetrayl-tetrakis[3,5-di-tert-butyl-4-hydroxyhydrocinnamat],
n-Octadecyl-(3,5-di-tert-butyl-4-hydroxyhydrocinnamat),
1,3,5-Trimethyl-2,4,6-tris[3,5-di-tert-butyl-4-hydroxybenzyl]benzol,

1,3,5-Tris[3,5-di-tert-butyl-4-hydroxybenzyl]isocyanurat,
2,6-Di-tert-butyl-p-kresol und
2,2'-Ethyliden-bis[4,6-di-tert-butyl-phenol].

Die Verbindungen der Formel I verhindern in Gegenwart sterisch gehinderter Amin-Lichtstabilisatoren auch Verfärbungen, z.B. in Gegenwart von Bis(1,2,2,6,6-Pentamethyl-4-piperidyl)-2-n-butyl-2-(3,5-di-tert-butyl-4-hydroxybenzyl)malonat, Bis(2,2,6,6-Tetramethyl-4-piperidyl)sebacat, Dimethylsuccinat-Polymer mit 4-Hydroxy-2,2,6,6-tetramethyl-1-piperidinethanol und Polymeren aus 2,4-Dichlor-6-tert-octylamino-s-triazin und N,N'-(2,2,6,6-Tetramethyl-4-piperidyl)hexamethylendiamin.

Die folgenden Beispiele erläutern die Erfindung weiter. Alle Mengenangaben beziehen sich auf das Gewicht, sofern nichts anderes angegeben ist.

Beispiel 1: Herstellung von O-Methyl-N,N-dibenzylhydroxylamin
Ein Gemisch aus 5,11 g Methoxyamin-hydrochlorid, 20,87 g Benzylbromid und 25,8 g Natriumcarbonat in 50 ml Dimethylformamid wird während 4 Stunden auf 85°C erhitzt. Anschliessend wird das Reaktionsgemisch mit Diethylether und Wasser behandelt. Die organische Phase wird abgetrennt, mit Wasser gewaschen, über $MgSO_4$ getrocknet und unter vermindertem Druck verdampft. Durch Säulenchromatographie des Rückstands erhält man das O-Methyl-N,N-dibenzylhydroxylamin in Form eines klaren, farblosen Oels.

Analyse für $C_{15}H_{17}NO$:

| | | | |
|---|---|---|---|
| berechnet | C 79,3; | H 7,5; | N 6,2; |
| gefunden | C 79,5; | H 7,6; | N 6,1. |

Beispiel 2: Herstellung von N,N,O-Tribenzylhydroxylamin
Ein Gemisch aus 13,04 g Benzyloxyamin-hydrochlorid, 20,0 ml Benzylbromid und 32,0 g Natriumcarbonat in 85 ml Dimethylformamid wird während 4 Tagen bei Raumtemperatur gerührt. Das Reaktionsgemisch

wird wie in Beispiel 1 beschrieben aufgearbeitet. Durch Destillation des Rohprodukts bei vermindertem Druck erhält man das N,N,O-Tribenzylhydroxylamin in Form eines klaren, farblosen Oels.

Analyse für $C_{21}H_{21}NO$:

| | | | |
|---|---|---|---|
| berechnet | C 83,1; | H 7,0; | N 4,6; |
| gefunden | C 82,7; | H 7,0; | N 4,9. |

Beispiel 3: Herstellung von N,N,O-Tris(m-methylbenzyl)hydroxylamin

Ein Gemisch aus 17,37 g Hydroxylamin-hydrochlorid und 105,9 g Natriumcarbonat in 450 ml Dimethylformamid wird während 30 Minuten bei Raumtemperatur gerührt. Anschliessend wird im Verlaufe von 15 Minuten eine Lösung von 92,5 g m-Methylbenzylbromid in 50 ml Dimethylformamid zugegeben. Das Gemisch wird während 12 Stunden bei Raumtemperatur gerührt, anorganische Bestandteile werden durch Filtration entfernt, und das Dimethylformamid wird unter vermindertem Druck entfernt. Man erhält einen öligen Feststoff. Der in Diethylether lösliche Anteil dieses öligen Feststoffs wird unter vermindertem Druck abdestilliert, wobei man das N,N,O-Tris(m-methylbenzyl)hydroxylamin in Form eines blassgelben Oels erhält.

Analyse für $C_{24}H_{27}NO$:

| | | | |
|---|---|---|---|
| berechnet | C 83,4; | H 7,9; | N 4,1; |
| gefunden | C 83,1; | H 7,9; | N 4,2. |

Beispiel 4: Herstellung von N-n-Dodecyl-O-benzylhydroxylamin

Ein Gemisch aus 11,55 g Benzyloxyamin-hydrochlorid, 31,0 g Natriumcarbonat und 34,8 ml n-Dodecylbromid in 100 ml Dimethylformamid wird während 24 Stunden auf 70°C und dann noch weitere 24 Stunden auf 80°C erhitzt. Das Lösungsmittel wird unter vermindertem Druck entfernt, und der Rückstand wird zwischen Wasser und Methylenchlorid verteilt. Die organische Schicht wird mit Wasser und Sole gewaschen, über $MgSO_4$ getrocknet und verdampft, wobei man einen öligen Rückstand erhält. Durch Flüssigchromatographie erhält man das N-n-dodecyl-O-benzylhydroxylamin in Form eines dickflüssigen Oels.

Analyse für $C_{19}H_{33}NO$:

| | | | |
|---|---|---|---|
| berechnet | C 78,3; | H 11,4; | N 4,8; |
| gefunden | C 78,8; | H 11,6; | N 4,7. |

Beispiel 5: Herstellung von N,N-Di-n-dodecyl-O-benzylhydroxylamin

Das N,N-Di-n-dodecyl-O-benzylhydroxylamin wird als Nebenprodukt bei der in Beispiel 4 beschriebenen Flüssigchromatographie isoliert.

Analyse für $C_{31}H_{57}NO$:

| | | | |
|---|---|---|---|
| berechnet | C 81,0; | H 12,5; | N 3,1; |
| gefunden | C 81,4; | H 12,8; | N 3,1. |

Beispiel 6: Herstellung von N,O-Dibenzylhydroxylamin

Eine Lösung von 25,0 g O-Benzylbenzaldoxim in 100 ml Methanol wird mit 3,0 g Natriumcyanborhydrid und einigen Milligramm Methylorange-Indikator vermischt. Es wird methanolisches Hydrochlorid zugegeben, um die Farbe des Reaktionsgemisches blassrosa zu halten (pH = 3). Nach 3-stündigem Rühren bei Raumtemperatur gibt man nochmals 5,0 g Natriumcyanborhydrid zu, und das Reaktionsgemisch (pH = 3) wird während 12 Stunden bei Raumtemperatur gerührt. Das Reaktionsgemisch wird mit wässrigem Natriumhydroxid alkalisch gestellt und dann mit Methylenchlorid extrahiert. Die kombinierte organische Schicht wird mit Wasser und Sole gewaschen, über $MgSO_4$ getrocknet und verdampft. Durch Flüssigchromatographie des erhaltenen Rohprodukts erhält man das N,O-Dibenzylhydroxylamin in Form einer farblosen Flüssigkeit.

Analyse für $C_{14}H_{15}NO$:

| | | | |
|---|---|---|---|
| berechnet | C 78,8; | H 7,1; | N 6,6; |
| gefunden | C 79,4; | H 7,4; | N 6,8. |

Beispiel 7: Herstellung von O-Methyl-N-benzylhydroxylamin

Das Verfahren gemäss Beispiel 6 wird wiederholt unter Verwendung von 15,0 g O-Methylbenzaldoxim und 20,0 g Natriumcyanborhydrid in 100 ml Methanol. Durch Kugelkopf-Destillation des Rohprodukts erhält man das O-Methyl-N-benzylhydroxylamin in Form einer farblosen Flüssigkeit.

Analyse für $C_8H_{11}NO$:

| | | | |
|---|---|---|---|
| berechnet | C 70,0; | H 8,1; | N 10,2; |
| gefunden | C 70,3; | H 8,2; | N 10,0. |

Beispiel 8: Herstellung von α,α'-Bis(benzyloxyamino)-p-xylol

Nach dem in Beispiel 6 beschriebenen Verfahren werden 7,0 g 0,0'-Dibenzyl-1,4-benzoldicarboxaldoxim und 20,0 g Natriumcyanborhydrid in 100 ml Methanol umgesetzt. Nach der Flüssigchromatographie erhält man das neue α,α'-Bis(benzyloxyamino)-p-xylol in Form eines Oels.

Analyse für $C_{22}H_{24}N_2O_2$:

| | | | |
|---|---|---|---|
| berechnet | C 75,8; | H 6,9; | N 8,1; |
| gefunden | C 76,6; | H 6,9; | N 8,2. |

Beispiel 9: Herstellung von 1,8-Bis(N,N-dibenzylaminoxy)octan

Eine Lösung von 24,0 g N-Hydroxyurethan, 31,1 g 1,8-Dibromoctan und 12,8 g Kaliumhydroxid in Ethanol wird während 8 Stunden am Rückfluss erhitzt. Das rohe Reaktionsgemisch wird unter vermindertem Druck konzentriert und der Rückstand wird in Methylenchlorid aufgelöst, mit Wasser und Sole gewaschen, über $MgSO_4$ getrocknet und verdampft. Man erhält 25,0 g 1,8-Octamethylendioxydiurethan. Das rohe Diurethan wird mit 40 g Kaliumhydroxid in 100 ml Wasser während 8 Stunden am Rückfluss erhitzt. Das entstandene Diamin wird in Methylenchlorid extrahiert, mit Wasser und Sole gewaschen und über $MgSO_4$ getrocknet. Nach dem Verdampfen des Methylenchlorids unter vermindertem Druck erhält man 18,1 g rohes 1,8-Octamethylendioxydiamin. Eine Lösung des rohen Diamins in 100 ml Dimethylformamid wird mit 44,0 g wasserfreiem Natriumcarbonat versetzt. Anschliessend fügt man tropfenweise 49,0 ml Benzylbromid hinzu. Das Reaktionsgemisch wird während 12 Stunden bei Raumtemperatur gerührt, dann wird das Lösungsmittel unter vermindertem Druck entfernt und der Rückstand wird zwischen Methylenchlorid und Wasser verteilt. Der kombinierte organische Extrakt wird mit Wasser und Sole gewaschen, über $MgSO_4$ getrocknet und verdampft. Das erhaltene Rohprodukt wird mittels Flüssigchromatographie gereinigt. Man erhält das 1,8-Bis(N,N-dibenzylaminoxy)octan in Form eines wachsartigen weissen Feststoffes; Smp. 49-51°C.

Analyse für $C_{36}H_{44}N_2O_2$:

| | | | |
|---|---|---|---|
| berechnet | C 80,56; | H 8,26; | N 5,22; |
| gefunden | C 80,7; | H 8,4; | N 5,2. |

**Beispiel 10: Verarbeitung von Polypropylen**

Die Grundformulierung enthält 100 Teile Polypropylen (Profax 6501® der Fa. Himont, USA) und 0,1 Teil Kalziumstearat. Die in Tabelle 1 angegebenen Stabilisatoren werden in Form von Lösungen in Methylenchlorid mit dem Polypropylen vermischt. Nach dem Verdampfen des Lösungsmittels unter vermindertem Druck wird das Harz bei den folgenden Bedingungen bei 100 Umdrehungen/Minute extrudiert:

Extrusionsbedingungen

| | | | |
|---|---|---|---|
| Zylinder 1 | 232°C | Düse 1 | 260°C |
| Zylinder 2 | 246°C | Düse 2 | 260°C |
| Zylinder 3 | 260°C | Düse 3 | 260°C. |

Nach der ersten, dritten und fünften Extrusion werden die Harzkügelchen unter Druck bei 193°C zu 3,2 mm dicken Folien verformt. Der "Yellowness Index" der Proben wird gemäss ASTM D 1925-63T bestimmt. Die Schmelzfliessgeschwindigkeit wird gemäss ASTM 1238, Bedingungen L, bestimmt. Höhere Werte bedeuten geringere Molmasse und sind ein Hinweis darauf, dass sich das Polymer abgebaut hat.

Die Ergebnisse sind in Tabelle 1 zusammengefasst.

In verschiedenen Test-Serien werden die Schmelzfliessgeschwindigkeit und/oder der Yellowness Index nach Extrusion der Verbindungen gemäss den Beispielen 1, 2, 7, 8 und 9 geprüft.

Die Ergebnisse sind in Tabelle 2 zusammengefasst.

Tabelle 1

| Stabilisator | "Yellowness Index" nach der | | | Schmelzfliessgeschwindigkeit g/10 Min. nach der | |
|---|---|---|---|---|---|
| | 1. Extr. | 3. Extr. | 5. Extr. | 1. Extr. | 5. Extr. |
| ohne | 2,5 | 3,5 | 4,7 | 6,3 | 14,9 |
| 0,1 % Antioxidans A | 7,4 | 13,2 | 15,9 | 3,4 | 6,9 |
| 0,1 % Antioxidans A + 0,5 % Bsp. 3 | 6,2 | 6,9 | 7,5 | 4,2 | 6,5 |
| 0,1 % Antioxidans A + 0,05 % Bsp. 4 | 3,2 | 3,4 | 3,6 | 4,5 | 5,7 |
| 0,1 % Antioxidans A + 0,05 % Bsp. 5 | 4,5 | 4,4 | 4,4 | 3,3 | 3,7 |
| 0,1 % Antioxidans A + 0,05 % Bsp. 6 | 1,1 | 0,2 | 3,2 | 3,3 | 5,0 |

Antioxidans A = Neopentyl-tetrakis[3-(3',5'-di-tert-butyl-4'-hydroxyphenyl)propanoat]

Tabelle 2

| Stabilisator | "Yellowness Index" nach der | | | Schmelzfliessgeschwindigkeit g/10 Min. nach der | |
|---|---|---|---|---|---|
| | 1. Extr. | 3. Extr. | 5. Extr. | 1. Extr. | 5. Extr. |
| ohne | 3,6 | 3,9 | 4,6 | 4,4 | 11,5 |
| 0,1 % Antioxidans A | 6,1 | 7,9 | 9,4 | 2,5 | 4,2 |
| 0,1 % Antioxidans A + 0,5 % Bsp. 7 | 2,7 | 3,5 | 4,5 | 3,2 | 4,4 |
| 0,1 % Antioxidans A + 0,05 % Bsp. 8 | 4,0 | 5,1 | 5,8 | 3,6 | 5,7 |
| ohne | 4,6 | 4,3 | 4,4 | nicht geprüft | |
| 0,1 % Antioxidans A | 6,3 | 8,8 | 10,0 | | |
| 0,1 % Antioxidans A + 0,05 % Bsp. 1 | 5,4 | 7,7 | 7,7 | | |
| ohne | -3,5 | -3,4 | -2,7 | nicht geprüft | |
| 0,1 % Antioxidans A | -1,1 | 1,4 | 3,8 | | |
| 0,1 % Antioxidans A + 0,05 % Bsp. 2 | -2,6 | -2,6 | -2,2 | | |
| ohne | 4,4 | 6,6 | 8,0 | nicht geprüft | |
| 0,1 % Antioxidans A | 7,1 | 11,0 | 12,0 | | |
| 0,1 % Antioxidans A + 0,05 % Bsp. 9 | 7,4 | 9,1 | 8,0 | | |

Antioxidans A = Neopentyl-tetrakis[3-(3',5'-di-tert-butyl-4'-hydroxyphenyl)propanoat]

Niedrigere Werte beim Yellowness Index bedeuten geringere Verfärbung; Minuswerte bedeuten, dass ein Ausbleichen des Polymeren stattgefunden hat.

Beispiel 11: Lichtstabilität von Polypropylen

Unstabilisiertes Polypropylenpulver (Hercules Profax® 6501) wird mit der unten angegebenen Menge Stabilisator innig vermischt. Das vermischte Material wird dann bei 182°C auf einem Zweiwalzenstuhl während 5 Minuten zu einer Platte gewalzt. Die Platte wird aus dem Walzenstuhl entnommen und abgekühlt. Anschliessend wird die Platte zu Proben zerschnitten und in einer hydraulischen Presse bei 220°C und einem Druck von 1,2 x $10^6$ Pa zu 0,64 mm dicken Folien verpresst. Die Proben werden in einer fluoreszierenden Sonnenlicht-/Schwarzlicht-Apparatur (FS/BL-Test) belichtet. Als Mass für die Wirksamkeit des Stabilisators gilt die Zeit in Stunden bis zum Erreichen einer Carbonylabsorption von 0,5 (ermittelt durch Infrarot-Spektroskopie des belichteten Films).

Die Resultate sind in Tabelle 3 zusammengefasst.

Tabelle 3

| Stabilisator | Konzentration | Stunden bis zum Erreichen einer Carbonylabsorption von 0,5 (FS/BL-Test) |
|---|---|---|
| ohne | – | 100 |
| Beispiel 1 | 0,3 Gew.% | 380 |
| Beispiel 2 | 0,2 Gew.% | 230 |
| Beispiel 3 | 0,2 Gew.% | 200 |
| Beispiel 4 | 0,2 Gew.% | 310 |
| Beispiel 5 | 0,2 Gew.% | 400 |
| Beispiel 9 | 0,2 Gew.% | 250 |

Diese Daten illustrieren die Stabilisatorwirkung der Verbindungen der Formel I.

Beispiel 12: Gasfarbbeständigkeit von Polypropylenfasern

Die Grundformulierung besteht aus 100 Teilen Polypropylen (Profax® 6501 der Fa. Himont), 0,1 Teil Kalziumstearat, 0,1 Teil Antioxidans B [1:1 Gemisch aus Neopentyl-tetrakis[3-(3',5'-di-tert-butyl-4'-hydroxyphenyl)propanoat] und Tris(2,4-di-tert-butylphenyl)phosphit] und 0,25 Teilen Lichtstabilisator C [Polykondensationsprodukt aus 2,4-Dichlor-6-tert-octylamino-s-triazin und 4,4'-Hexamethylen-bis(amino-2,2,6,6-tetramethylpiperidin)].

Die Stabilisatoren werden als Lösung in Methylenchlorid mit dem Polypropylen vermischt, einmal extrudiert und zu Kügelchen verarbeitet. Die erhaltenen stabilisierten Harzkügelchen werden bei 260°C zu Fasern versponnen. Die Prüfung auf Gas-Farbbeständigkeit wird gemäss der AATCC Prüfmethode 23 (Farbbeständigkeit gegen Abgase) in einer Abgaskammer (Trommel-Modell Nr. 8727) durchgeführt. Der "Yellowness Index" wird vor der Prüfung in der Abgas-Kammer und nach einem Tag Behandlung in der Abgas-Kammer (60°C) bestimmt. Niedrigere Werte bedeuten geringere Verfärbung und geringere Vergilbung.

Die Ergebnisse sind in Tabelle 4 aufgeführt.

Tabelle 4

| Stabilisator | "Yellowness Index" nach | |
|---|---|---|
| | 0 Tagen | 1 Tag |
| Grundformulierung — | 5,7 | 25 |
| Grundformulierung + 0,25 Gew.% Beispiel 2 | 2,7 | 21 |

Beispiel 13: Beständigkeit gegen Gewichtsverlust wegen Flüchtigkeit

Die höhermolekularen Verbindungen der Formel I besitzen bei hohen Temperaturen, wie sie bei der Verarbeitung von Polyolefinen, auftreten, nur eine geringe Flüchtigkeit, d.h. sie sind beständig gegen Gewichtsverlust. Dies wird mit Hilfe einer thermo-gravimetrischen Analyse nachgewiesen. Die Proben werden unter Stickstoff (100 ml $N_2$/Minute) bei 80%iger Verdrängung mit einer Temperatursteigerung von 10°C/Minute von Raumtemperatur auf 500°C erhitzt. Für die Verbindung gemäss Beispiel 9 ergeben sich bei der Verwendung als Verarbeitungsstabilisator für Polyolefin folgende Werte:

| Temperatur (°C) bis zu | | |
| --- | --- | --- |
| 1 % | 10 % | 50 % Gewichtsverlust |
| 245 | 280 | 305. |

Die Daten in den Beispielen 9-13 illustrieren die gute Stabilisatorwirkung der Verbindungen der Formel I und die guten Eigenschaften der damit stabilisierten Substrate.

EP: alle Länder ausser ES

Patentansprüche

1. Zusammensetzungen enthaltend gegen oxidativen, thermischen und/oder aktinischen Abbau empfindliche Kunststoffe, Polymere, Harze oder Schmieröle und mindestens eine Verbindung der Formel I

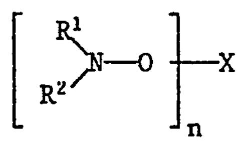

(I),

worin

$R^1$ Wasserstoff, $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl bedeutet,

$R^2$ $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl darstellt,

n 1 bis 4 ist,

X, bei n = 1, eine der für $R^2$ angegebenen Bedeutungen hat,

bei n = 2, $C_2$-$C_{12}$-Alkylen, $C_6$-$C_{10}$-Cycloalkylen oder $C_8$-$C_{10}$-Alkylenarylenalkylen,

bei n = 3, $C_3$-$C_6$-Alkantriyl oder eine Gruppe der Formel

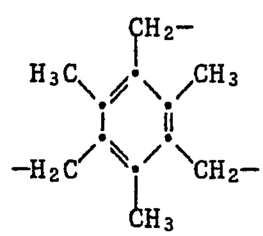

und

bei n = 4, $C_4$-$C_6$-Alkantetrayl darstellt.

2. Zusammensetzungen nach Anspruch 1, worin $R^1$ und $R^2$ unabhängig voneinander $C_1$-$C_{18}$-Alkyl, $C_5$-$C_6$-Cycloalkyl, Benzyl oder Methylbenzyl darstellen.

3. Zusammensetzungen nach Anspruch 1, worin $R^1$ und $R^2$ n-Dodecyl, Methylbenzyl und insbesondere Benzyl darstellen.

4. Zusammensetzungen nach Anspruch 1, worin $R^1$ Wasserstoff ist und $R^2$ $C_1$-$C_{18}$-Alkyl, $C_5$-$C_6$-Cycloalkyl, Benzyl oder Methylbenzyl darstellt.

5. Zusammensetzungen nach Anspruch 1, worin $R^1$ Wasserstoff und $R^2$ n-Dodecyl, Methylbenzyl und insbesondere Benzyl darstellen.

6. Zusammensetzungen nach Anspruch 1, worin n 1 oder 2 darstellt.

7. Zusammensetzungen nach Anspruch 1, worin n die Zahl 1 bedeutet und X $C_1$-$C_{18}$-Alkyl, $C_5$-$C_6$-Cycloalkyl, Benzyl oder Methylbenzyl darstellt.

8. Zusammensetzungen nach Anspruch 1, worin n die Zahl 2 und X $C_2$-$C_{12}$-Alkylen, Cyclohexylen oder Xylylen bedeuten.

9. Zusammensetzungen nach Anspruch 1, worin das zu stabilisierende Material ein synthetisches Polymer ist.

10. Zusammensetzungen nach Anspruch 9, worin das synthetische Polymer ein Polyolefinhomo- oder -copolymer ist.

11. Zusammensetzungen nach Anspruch 1, die zusätzlich ein Metallsalz einer höheren Fettsäure und/oder ein phenolisches Antioxidans enthalten.

12. Verwendung von Verbindungen der Formel I nach Anspruch 1 zum Stabilisieren von gegen oxidativen, thermischen und/oder aktinischen Abbau empfindlichen Kunststoffen, Polymeren, Harzen oder Schmierölen.

13. Verbindungen der Formel Ia

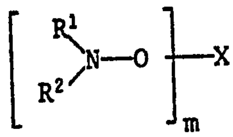

(Ia),

worin
$R^1$ Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeutet,
$R^2$ $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl darstellt,
m 2 bis 4 ist,
X, bei m = 2, $C_2$-$C_{12}$-Alkylen, $C_6$-$C_{10}$-Cycloalkylen oder $C_8$-$C_{10}$-Alkylenarylenalkylen,
bei m = 3, $C_3$-$C_6$-Alkantriyl oder eine Gruppe der Formel

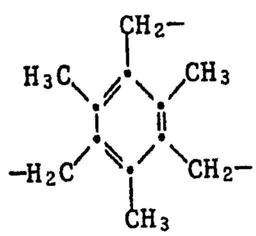

und

bei m = 4, $C_4$-$C_6$-Alkantetrayl darstellt, mit der Massgabe, dass bei m = 2 und X = $C_2$-$C_{12}$-Alkylen mindestens eines von $R^1$ und $R^2$ $C_7$-$C_9$-Aralkyl oder durch $C_1$-$C_{36}$-Alkyl substituiertes $C_7$-$C_9$-Aralkyl bedeutet.

14. 1,8-Bis(N,N-dibenzylaminoxy)octan nach Anspruch 13.

15. α,α'-Bis(benzyloxyamino)-p-xylol.

FO 7.3 (SR)HO/ga*

EP: ES

Patentansprüche

1. Zusammensetzungen enthaltend gegen oxidativen, thermischen und/oder aktinischen Abbau empfindliche Kunststoffe, Polymere, Harze oder Schmieröle und mindestens eine Verbindung der Formel I

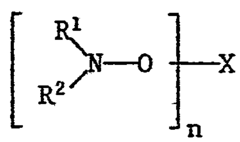

(I),

worin

$R^1$ Wasserstoff, $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl bedeutet, $R^2$ $C_1$-$C_{36}$-Alkyl, $C_5$-$C_{12}$-Cycloalkyl, $C_7$-$C_9$-Aralkyl oder mit $C_1$-$C_{36}$-Alkyl substituiertes $C_7$-$C_9$-Aralkyl darstellt,

n 1 bis 4 ist,

X, bei n = 1, eine der für $R^2$ angegebenen Bedeutungen hat,

bei n = 2, $C_2$-$C_{12}$-Alkylen, $C_6$-$C_{10}$-Cycloalkylen oder $C_8$-$C_{10}$-Alkylenarylenalkylen,

bei n = 3, $C_3$-$C_6$-Alkantriyl oder eine Gruppe der Formel

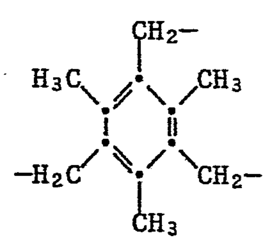

und

bei n = 4, $C_4$-$C_6$-Alkantetrayl darstellt.

2. Zusammensetzungen nach Anspruch 1, worin $R^1$ und $R^2$ unabhängig voneinander $C_1$-$C_{18}$-Alkyl, $C_5$-$C_6$-Cycloalkyl, Benzyl oder Methylbenzyl darstellen.

3. Zusammensetzungen nach Anspruch 1, worin $R^1$ und $R^2$ n-Dodecyl, Methylbenzyl und insbesondere Benzyl darstellen.

4. Zusammensetzungen nach Anspruch 1, worin $R^1$ Wasserstoff ist und $R^2$ $C_1$-$C_{18}$-Alkyl, $C_5$-$C_6$-Cycloalkyl, Benzyl oder Methylbenzyl darstellt.

5. Zusammensetzungen nach Anspruch 1, worin $R^1$ Wasserstoff und $R^2$ n-Dodecyl, Methylbenzyl und insbesondere Benzyl darstellen.

6. Zusammensetzungen nach Anspruch 1, worin n 1 oder 2 darstellt.

7. Zusammensetzungen nach Anspruch 1, worin n die Zahl 1 bedeutet und X $C_1$-$C_{18}$-Alkyl, $C_5$-$C_6$-Cycloalkyl, Benzyl oder Methylbenzyl darstellt.

8. Zusammensetzungen nach Anspruch 1, worin n die Zahl 2 und X $C_2$-$C_{12}$-Alkylen, Cyclohexylen oder Xylylen bedeuten.

9. Zusammensetzungen nach Anspruch 1, worin das zu stabilisierende Material ein synthetisches Polymer ist.

10. Zusammensetzungen nach Anspruch 9, worin das synthetische Polymer ein Polyolefinhomo- oder -copolymer ist.

11. Zusammensetzungen nach Anspruch 1, die zusätzlich ein Metallsalz einer höheren Fettsäure und/oder ein phenolisches Antioxidans enthalten.

12. Verfahren zum Stabilisieren von gegen oxidativen, thermischen und/oder aktinischen Abbau empfindlichen Kunststoffen, Polymeren, Harzen oder Schmierölen, dadurch gekennzeichnet, dass man den genannten Materialien mindestens eine Verbindung der Formel I nach Anspruch 1 einverleibt.

13. Verfahren zur Herstellung von Verbindungen der Formel Ia

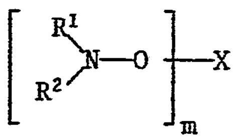

(Ia),

worin

$R^1$ Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeutet,

$R^2$ $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl darstellt,

m 2 bis 4 ist,

X, bei m = 2, $C_2$-$C_{12}$-Alkylen, $C_6$-$C_{10}$-Cycloalkylen oder $C_8$-$C_{10}$-Alkylenarylenalkylen,

bei m = 3, $C_3$-$C_6$-Alkantriyl oder eine Gruppe der Formel

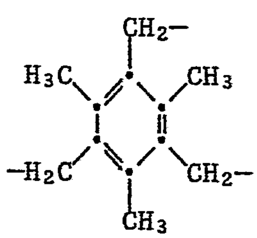

und

bei m = 4, $C_4$-$C_6$-Alkantetrayl darstellt, mit der Massgabe, dass bei m = 2 und X = $C_2$-$C_{12}$-Alkylen mindestens eines von $R^1$ und $R^2$ $C_7$-$C_9$-Aralkyl oder durch $C_1$-$C_{36}$-Alkyl substituiertes $C_7$-$C_9$-Aralkyl bedeutet, dadurch gekennzeichnet, dass man eine Verbindung der Formel IIa

$$[\ H_2N{-}O{-}]_m X'\qquad (IIa),$$

worin X' Wasserstoff ist oder eine der für X angegebenen Bedeutungen hat, gegebenenfalls in Gegenwart eines organischen Lösungsmittels, mit einem Halogenid $R^2$-Hal oder einem Gemisch verschiedener Halogenide $R^2$-Hal umsetzt, wobei $R^2$ die oben angegebene Bedeutung hat und Hal ein Halogenatom darstellt.

14. Verfahren nach Anspruch 13, worin die Verbindung der Formel IIa 1,8-Octamethylendioxydiamin ist.

15. Verfahren zur Herstellung von α,α'-Bis(benzyloxyamino)-p-xylol, durch Umsetzung von O,O'-Dibenzyl-1,4-benzoldicarboxaldoxim in Gegenwart eines alkoholischen Lösungsmittels und eines Hydrid-Reduktionsmittels.

FO 7.3(SR)HO/ga*